# FASCICULE DE BREVET EUROPEEN

(11) **EP 3 569 119 B1**
(45) Date de publication et mention de la délivrance du brevet: **25.02.2026**
(21) Numéro de dépôt: 19173574.5
(22) Date de dépôt: 09.05.2019
(51) Int. Cl.: A47J 45/07, A47J 45/10

(54) **ENSEMBLE FORMÉ PAR UN RÉCIPIENT DE CUISSON MUNI D´UNE ANSE ET UNE POIGNÉE AMOVIBLE**
ZUSAMMENBAU VON EINEM KOCHBEHÄLTER MIT EINEM HENKEL UND EINEM ABNEHMBAREM GRIFF
SET FORMED BY A COOKING CONTAINER COMPRISING A HANDLE AND A REMOVABLE HANDLE

(30) Priorité: 18.05.2018 FR 1854197
(43) Date de publication de la demande: 20.11.2019
(73) Titulaire: SEB S.A., 69130 Ecully (FR)
(72) Inventeur: MONTGELARD, Michel, 73100 AIX LES BAINS (FR)
(74) Mandataire: SEB Développement

(56) Documents cités:
- EP-A1- 1 476 064
- EP-A1- 3 241 468
- EP-B1- 1 476 064
- FR-A1- 2 579 444
- FR-A1- 2 802 074
- FR-B1- 2 802 074
- US-B1- 6 250 493

## Description

La présente invention se rapporte au domaine technique général des récipients de cuisson et des poignées amovibles, la poignée amovible étant destiné à coopérer avec le récipient de cuisson qui présente au moins une anse recourbée vers l'extérieur.

Il est connu, du brevet EP1476064, un ensemble formé par un récipient de cuisson comprenant une anse recourbée vers l'extérieur et dans laquelle est ménagée une ouverture ainsi qu'une poignée amovible destinée à coopérer avec l'anse. La poignée amovible s'étend selon un axe longitudinal et comporte à une extrémité un bec susceptible d'être introduit dans l'ouverture. Le bec est muni d'une paroi d'appui inférieure pour coopérer avec une face d'appui supérieure de l'anse. La poignée comporte un dispositif de verrouillage comprenant un verrou mobile en translation suivant l'axe longitudinal entre une position d'accouplement dans laquelle la poignée est assemblée sur l'anse et une position de désaccouplement dans laquelle la poignée peut être désassemblée de l'anse. L'anse comporte une extrémité libre sous laquelle se glisse le verrou dans la position d'accouplement. Le document FR 2 579 444 A1 divulgue un ensemble formé par un récipient de cuisson comprenant au moins une anse recourbée vers l'extérieur et dans laquelle est ménagée une ouverture ainsi qu'une poignée amovible destinée à coopérer avec ladite anse, ladite poignée amovible s'étendant selon un axe longitudinal et comportant à une extrémité un bec susceptible d'être introduit dans ladite ouverture pour s'assembler sur l'anse par basculement autour d'un axe de pivotement, transversal à l'axe longitudinal et compris dans un plan horizontal, ledit bec étant muni d'une paroi d'appui inférieure pour coopérer avec une face d'appui supérieure de l'anse pour former un deuxième appui postérieur à l'axe de pivotement, ladite poignée comportant un dispositif de verrouillage comprenant un verrou mobile en translation suivant l'axe longitudinal entre une position d'accouplement dans laquelle la poignée est assemblée sur l'anse et une position de désaccouplement dans laquelle la poignée peut être désassemblée de l'anse, ladite anse comportant une extrémité libre, ensemble dans lequel le verrou comporte une paroi inclinée par rapport à un plan horizontal passant par l'axe longitudinal, qui exerce un effort sur l'extrémité libre de l'anse pour plaquer la face d'appui supérieure contre la paroi d'appui inférieure selon un axe perpendiculaire à l'axe longitudinal dans la position d'accouplement, et en ce que l'extrémité libre de l'anse comporte une arête inférieure rectiligne, la paroi inclinée exerçant un effort sur l'arête inférieure pour plaquer la face d'appui supérieure contre la paroi d'appui inférieure selon l'axe perpendiculaire à l'axe longitudinal dans la position d'accouplement.

Cependant, dans de tels dispositifs, un jeu mécanique conséquent est nécessaire entre le verrou et l'anse pour obtenir un effort de manœuvre du verrou acceptable, notamment lors du recul du verrou pour désaccoupler la poignée de l'anse.

Ainsi de tels dispositifs de préhension présentent l'inconvénient de ne pas permettre une parfaite immobilisation de la poignée sur l'anse, notamment suivant un axe transversal vertical à l'axe longitudinal de la poignée.

Le but de la présente invention est de remédier aux inconvénients précités et de proposer un ensemble formé par un récipient de cuisson et une poignée amovible présentant une ergonomie optimisée pour permettre à l'utilisateur de la manipuler facilement, en toute sécurité.

Un autre but de l'invention est de proposer une poignée amovible qui soit de conception simple et économique à mettre en œuvre.

Un autre but de l'invention est de proposer une poignée amovible et un récipient de cuisson qui puissent être rangés facilement.

Ces buts sont atteints avec un ensemble selon la revendication 1.

La paroi inclinée permet de pincer l'anse dans la position d'accouplement et ainsi de supprimer les jeux verticaux, une fois la poignée agencée sur l'anse. L'absence de mouvement relatif entre l'anse et la poignée lors des manipulations du récipient de cuisson permet d'améliorer l'ergonomie et la qualité perçue par l'utilisateur

Selon l'invention, la paroi inclinée est plane et l'extrémité libre de l'anse comporte une arête inférieure rectiligne, la paroi inclinée exerçant un effort sur l'arête inférieure pour plaquer la face d'appui supérieure contre la paroi d'appui inférieure selon l'axe perpendiculaire à l'axe longitudinal dans la position d'accouplement.

Ainsi, la paroi inclinée du verrou agit sur l'anse par uniquement une ligne de contact. En conséquence, la surface de contact entre la paroi inclinée et l'anse est minimisée.

De préférence, l'angle α est compris entre 10° et 20°, de préférence 15°.

Cette disposition permet d'obtenir un pincement efficace de l'anse par la paroi inclinée du verrou. Un faible effort de poussée du verrou vers la position d'accouplement permet de bloquer l'anse sur la poignée.

Avantageusement, le dispositif de verrouillage comporte un bouton de manœuvre du verrou et le bouton de manœuvre comporte une zone d'appui d'un doigt de l'utilisateur, ladite zone d'appui étant agencée sensiblement à l'aplomb de la paroi inclinée selon l'axe perpendiculaire à l'axe longitudinal, dans le plan de coupe vertical.

Par zone d'appui d'un doigt de l'utilisateur, on comprend que l'utilisateur appuie sur cette zone pour faire passer le verrou de la position d'accouplement vers la position de désaccouplement pour permettre de désassembler la poignée de l'anse.

Par une zone d'appui agencée sensiblement à l'aplomb de la paroi inclinée, on pourrait également comprendre qu'une projection de la surface d'appui sur l'axe longitudinal, dans le plan de coupe vertical, s'inscrit dans un segment qui est centré sur l'arête inférieure et qui présente une longueur inférieure à 10 millimètres.

Cette disposition permet de réduire les efforts induits dans le système de guidage en translation du verrou et du bouton lorsque l'utilisateur appuie sur la zone d'appui pour faire passer le verrou de la position d'accouplement vers la position de désaccouplement.

De préférence, le bouton de manœuvre comporte une excroissance s'étendant selon l'axe perpendiculaire à l'axe longitudinal, la zone d'appui étant agencée sur l'excroissance.

Ainsi, l'utilisateur peut appliquer un effort sur la zone d'appui selon l'axe longitudinal pour faire passer le verrou de la position d'accouplement vers la position de désaccouplement, ce qui permet de réduire les efforts induits dans le système de guidage en translation du verrou et du bouton.

Cette disposition permet à l'utilisateur de commander facilement avec un doigt le verrou, tout en tenant la poignée avec la même main.

Avantageusement, le dispositif de verrouillage comporte des moyens de rappel du verrou en position d'accouplement.

Cette disposition permet d'obtenir un maintien automatique du verrou en positon d'accouplement avec un effort constant appliqué sur l'extrémité libre de l'anse par la paroi inclinée. Ainsi le pincement de l'anse par la paroi inclinée est sensiblement constant et efficace.

De préférence, les moyens de rappel du verrou comportent un ressort.

Avantageusement, le récipient de cuisson est une poêle, une casserole ou une sauteuse.

Le récipient de cuisson est destiné à être disposé sur une plaque de cuisson, un brûleur ou analogue pour la cuisson d'aliments.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels :
- La figure 1 est une vue d'ensemble en perspective d'un ensemble formé par un récipient de cuisson comprenant une anse et une poignée amovible selon un mode particulier de réalisation de l'invention,
- La figure 2 est une vue en perspective de la poignée amovible de la figure 1,
- La figure 3 est une vue en coupe de la poignée amovible et de l'anse suivant le plan de coupe III de la figure 1, le verrou étant en position de désaccouplement,
- La figure 4 est une vue en coupe de la poignée amovible et de l'anse suivant le plan de coupe III de la figure 1, le verrou étant en position de d'accouplement.

On notera que, dans ce document, les termes «horizontal», «vertical», «inférieur», «supérieur», «longitudinal», «transversal», «haut», «bas», employés pour décrire le récipient de cuisson et la poignée, font référence à ce récipient de cuisson en situation d'usage, lorsqu'il est posé sur un plan horizontal.

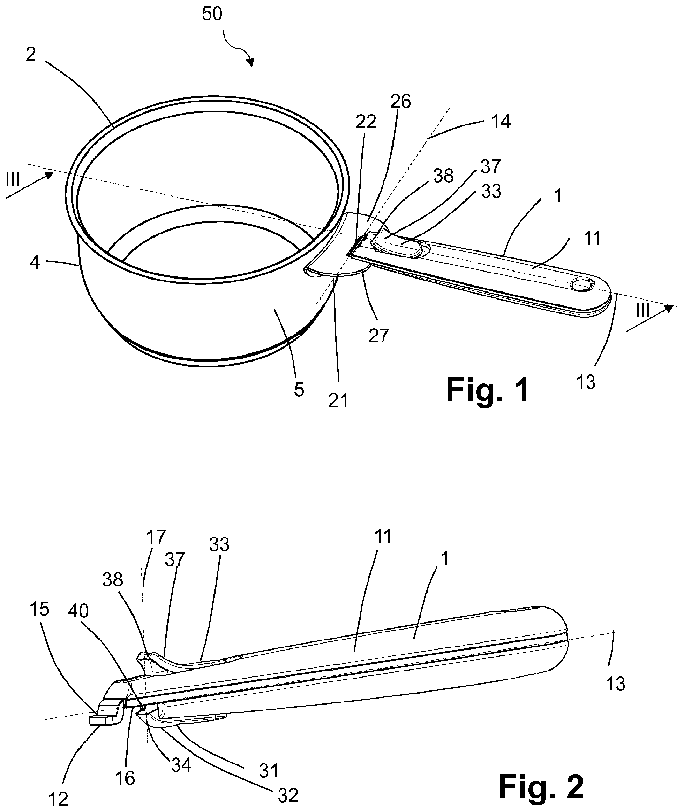

La figure 1 illustre un ensemble 50 formé par un récipient de cuisson 2 et une poignée 1 amovible. Le récipient de cuisson 2 comporte une calotte 4 munie d'une paroi latérale 5 sur laquelle est rapportée une anse 21. L'anse 21 est fixée sur la paroi latérale 5 notamment par deux rivets (non représentés sur la figure). L'anse 21 s'étend radialement par rapport à la paroi latérale 5 dans un plan sensiblement horizontal, parallèle au plan de pose de la calotte 4 pour former une extrémité libre 27. L'anse 21 comporte une ouverture 22 sensiblement rectangulaire.

Tel que visible aux figures 1 et 2, la poignée 1 amovible s'étend selon un axe longitudinal 13 et comprend à une extrémité un bec 12 à double cambrage (fig.2) destiné à coopérer avec l'ouverture 22 pour assembler ou désassembler la poignée 1 de l'anse 21. La poignée 1 comporte un corps de préhension 11 qui permet une fois la poignée 1 assemblée sur l'anse 21 de manipuler le récipient de cuisson 2.

Le bec 12 est introduit dans l'ouverture 22 par le dessus pour s'assembler sur l'anse 21 par basculement autour d'un axe de pivotement 14, transversal à l'axe longitudinal 13 et compris dans un plan horizontal. Le bec 12 comporte une face supérieure d'extrémité 15 qui coopère avec une face inférieure 23 de l'anse 21 pour former un premier appui antérieur à l'axe de pivotement 14. Le bec 12 comporte une paroi d'appui inférieure 16 qui coopère avec une face d'appui supérieure 26 de l'anse 21 pour former un deuxième appui postérieur à l'axe de pivotement 14. Ainsi lors de la manipulation par l'utilisateur, le poids du récipient de cuisson 2 crée un couple autour de l'axe de pivotement 14 qui génère un premier effort sur le premier appui et un deuxième effort sur le deuxième appui de direction opposée.

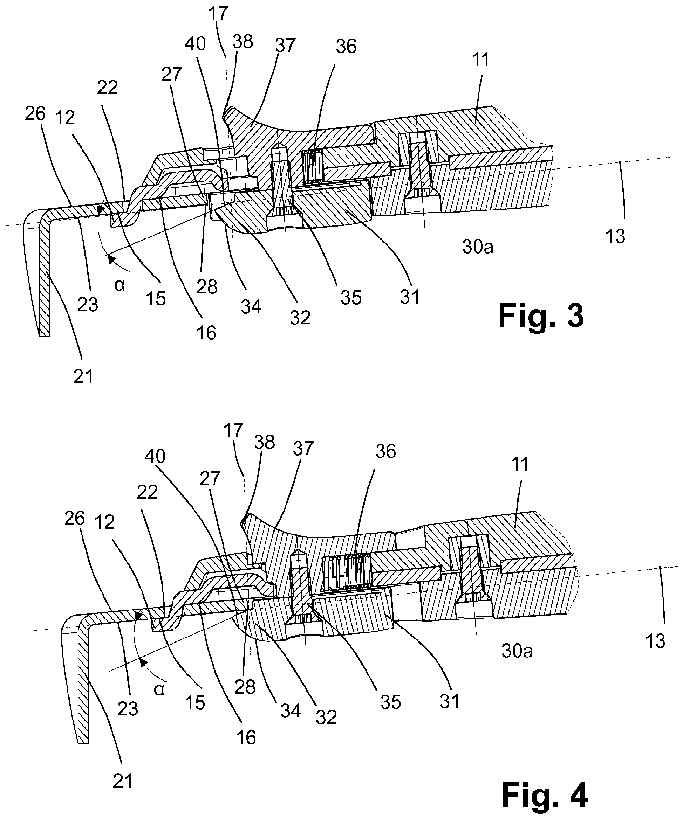

Conformément aux figures 3 et 4, la poignée 1 comporte un dispositif de verrouillage comprenant un verrou 31 mobile en translation suivant l'axe longitudinal 13. Le verrou 31 est mobile entre une position d'accouplement dans laquelle la poignée 1 est assemblée sur l'anse 21 (Fig.4) et une position de désaccouplement (Fig.3) dans laquelle la poignée 1 peut être désassemblée de l'anse 21. Le verrou 31 comporte une extrémité avant 32 qui est glissée sous la face inférieure 23 de l'anse 21 dans la position d'accouplement. Un bouton de manœuvre 33 est agencé sur le corps de préhension 11 et est fixé sur le verrou 31 par l'intermédiaire d'une vis 35 pour permettre la commande du verrou 31.

Un ressort 36 de rappel est agencé dans le corps de préhension 11 pour rappeler le verrou 31 en position d'accouplement. L'extrémité avant 32 du verrou 31 comporte une face inférieure arrondie 34 qui coopère avec l'extrémité libre 27 de l'anse 21 lors de l'assemblage de la poignée 1 par basculement sur l'anse 21. Ainsi, le recul du verrou 31 lors de l'assemblage de la poignée 1 sur l'anse 21 est automatique.

L'extrémité avant 32 du verrou 31 comporte une paroi 40 inclinée par rapport à un plan horizontal passant par l'axe longitudinal. La paroi 40 inclinée, sous l'action du ressort 36, exerce un effort sur l'extrémité libre 27 de l'anse pour plaquer la face d'appui supérieure 26 contre la paroi d'appui inférieure 16 selon un axe 17 perpendiculaire à l'axe longitudinal 13 dans la position d'accouplement. La paroi 40 inclinée est plane. L'extrémité libre de l'anse 27 comporte une arête inférieure 28 rectiligne sur laquelle la paroi 40 inclinée exerce un effort pour plaquer la face d'appui supérieure 26 contre la paroi d'appui inférieure 16 selon l'axe 17 perpendiculaire à l'axe longitudinal 13 dans la position d'accouplement.

La paroi 40 inclinée et l'axe longitudinal 13, dans un plan de coupe vertical, forme un angle de 15°. Ainsi, l'effort de rappel exercé par le ressort 36 sur le verrou 31 vers sa position d'accouplement génère sur l'arête inférieure 28 une force avec une composante verticale importante de plaquage de la face d'appui supérieure 26 de l'anse contre la paroi d'appui inférieure 16 du bec 12.

Le bouton de manœuvre 33 comporte une excroissance 37 s'étendant vers le haut selon l'axe 17 perpendiculaire à l'axe longitudinal 13 et agencée au dessus de l'extrémité avant 32 du verrou 31. L'excroissance 37 comporte une zone d'appui 38 d'un doigt de l'utilisateur qui est sensiblement à l'aplomb de la paroi 40 inclinée selon l'axe 17 perpendiculaire à l'axe longitudinal 13, dans le plan de coupe vertical. La zone d'appui 38 est positionnée devant la vis 35, vers l'extrémité avant 32.

En fonctionnement, l'utilisateur saisit le corps de préhension 11 de la poignée 1 et introduit le bec 12 dans l'ouverture 22 par le dessus. Ensuite, il fait basculer la poignée 1 autour d'un axe de pivotement 14, transversal à l'axe longitudinal 13 et compris dans le plan horizontal, et la face inférieure arrondie 34 de l'extrémité avant 32 du verrou 31 prend appui sur l'extrémité libre 27 de l'anse 21. En poursuivant le basculement de la poignée 1, le verrou 31 va reculer à l'encontre de la force de rappel du ressort 36. Lorsque la poignée 1 est quasiment en position assemblée sur l'anse 21, la face supérieure d'extrémité 15 du bec 12 vient en contact avec la face inférieure 23 de l'anse 21 et l'extrémité avant 32 du verrou 31 glisse sous la face inférieure 23 sous l'effet du ressort 36, la paroi 40 inclinée prend appui sur l'arête inférieure 28 pour plaquer l'anse 21 contre la paroi d'appui inférieure 16 du bec 12 (Fig. 4).

Pour désassembler la poignée 1 de l'anse 21, l'utilisateur commande le bouton de manœuvre 33 pour faire reculer le verrou 31 en position de désaccouplement, à l'encontre de la force de rappel du ressort 36. Lors du déplacement du verrou 31, la paroi 40 inclinée se désengage de l'arête inférieure 28. L'utilisateur peut ensuite basculer la poignée 1 et extraire le bec 12 de l'ouverture 22 de l'anse 21, tout en relâchant le bouton de manœuvre 33.

Bien entendu, l'invention n'est nullement limitée au mode de réalisation décrit et illustré qui n'a été donné qu'à titre d'exemple et des modifications restent possibles, notamment du point de vue de la constitution des divers éléments ou par substitution d'équivalents techniques, sans sortir pour autant du domaine de protection de l'invention, tel que défini dans les revendications.

Dans une variante de réalisation ne faisant pas partie de l'invention, la paroi inclinée peut présenter dans un plan de coupe vertical un profil légèrement incurvé vers le haut.

## Revendications

1. Ensemble (50) formé par un récipient de cuisson (2) comprenant au moins une anse (21) recourbée vers l'extérieur et dans laquelle est ménagée une ouverture (22) ainsi qu'une poignée (1) amovible destinée à coopérer avec ladite anse (21), ladite poignée (1) amovible s'étendant selon un axe longitudinal (13) et comportant à une extrémité un bec (12) susceptible d'être introduit dans ladite ouverture (22) pour s'assembler sur l'anse (21) par basculement autour d'un axe de pivotement (14), transversal à l'axe longitudinal (13) et compris dans un plan horizontal, ledit bec (12) comportant une face supérieure d'extrémité (15) pour coopérer avec une face inférieure (23) de l'anse (21) formant un premier appui antérieur à l'axe de pivotement (14), et ledit bec (12) étant muni d'une paroi d'appui inférieure (16) pour coopérer avec une face d'appui supérieure (26) de l'anse (21) pour former un deuxième appui postérieur à l'axe de pivotement (14), ladite poignée (1) comportant un dispositif de verrouillage comprenant un verrou (31) mobile en translation suivant l'axe longitudinal (13) entre une position d'accouplement dans laquelle la poignée (1) est assemblée sur l'anse (21) et une position de désaccouplement dans laquelle la poignée (1) peut être désassemblée de l'anse (21), ladite anse (21) comportant une extrémité libre (27), le verrou (31) comportant une paroi (40) inclinée d'un angle α par rapport à un plan horizontal passant par l'axe longitudinal (13) qui exerce un effort sur l'extrémité libre (27) de l'anse (21) pour plaquer la face d'appui supérieure (26) contre la paroi d'appui inférieure (16) selon un axe (17) perpendiculaire à l'axe longitudinal (13) dans la position d'accouplement, la paroi (40) inclinée étant plane et l'extrémité libre (27) de l'anse comportant une arête inférieure (28) rectiligne, la paroi (40) inclinée exerçant un effort sur l'arête inférieure (28) pour plaquer la face d'appui supérieure (26) contre la paroi d'appui inférieure (16) selon l'axe (17) perpendiculaire à l'axe longitudinal (13) dans la position d'accouplement, la paroi (40) inclinée du verrou agissant sur l'anse (21) par uniquement une ligne de contact.

2. Ensemble (50) selon la revendication 1, **caractérisé en ce que** l'angle α est compris entre 10° et 20°, de préférence 15°.

3. Ensemble (50) selon l'une quelconque des revendications 1 à 2 **caractérisé en ce que** le dispositif de verrouillage comporte un bouton de manœuvre (33) du verrou (31) et **en ce que** le bouton de manœuvre (33) comporte une zone d'appui (38) d'un doigt de l'utilisateur, ladite zone d'appui (38) étant agencée sensiblement à l'aplomb de la paroi (40) inclinée selon l'axe (17) perpendiculaire à l'axe longitudinal (13), dans le plan de coupe vertical.

4. Ensemble (50) selon la revendication 3, **caractérisé en ce que** le bouton de manœuvre (33) comporte une excroissance (37) s'étendant selon l'axe (17) perpendiculaire à l'axe longitudinal (13), la zone d'appui (38) étant agencée sur l'excroissance (37).

5. Ensemble (50) selon l'une quelconque des revendications 1 à 4, **caractérisé en ce que** le dispositif de verrouillage comporte des moyens de rappel (36) du verrou (31) en position de d'accouplement.

6. Ensemble (50) selon la revendication 5, **caractérisé en ce que** les moyens de rappel du verrou (31) comportent un ressort (36).

7. Ensemble (50) selon l'une quelconque des revendication 1 à 6 **caractérisé en ce que** le récipient de cuisson (2) est une poêle, une casserole ou une sauteuse

## Patentansprüche

1. Baugruppe (50), bestehend aus einem Kochgefäß (2), das mindestens einen nach außen gekrümmten Griff (21) mit einer darin vorgesehenen Öffnung (22) umfasst, und einem abnehmbaren Griff (1), der dazu bestimmt ist, mit dem genannten Griff (21) zu kooperieren, wobei der abnehmbare Griff (1) sich entlang einer Längsachse (13) erstreckt und an einem Ende eine Sptize (12) aufweist, der in die genannte Öffnung (22) eingeführt werden kann, um am Griff (21) durch Schwenken um eine Drehachse (14) montiert zu werden, die quer zur Längsachse (13) verläuft und in einer horizontalen Ebene liegt, wobei die genannte Sptize (12) eine obere Endfläche (15) aufweist, die mit einer unteren Fläche (23) des Griffs (21) zusammenarbeitet und eine erste Stütze vor der Drehachse (14) bildet, und die genannte Sptize (12) mit einer unteren Stützwand (16) ausgestattet ist, die mit einer oberen Stützfläche (26) des Griffs (21) zusammenarbeitet, um eine zweite Stütze hinter der Drehachse (14) zu bilden, wobei der genannte Griff (1) eine Verriegelungsvorrichtung enthält, die eines Riegels (31) umfasst, das entlang der Längsachse (13) zwischen einer Verkuppelposition, in der der Griff (1) am Griff (21) montiert ist, und einer Entkuppelposition, in der der Griff (1) vom Griff (21) abgenommen werden kann, beweglich ist, wobei der genannte Griff (21) ein freies Ende (27) aufweist, das Riegels (31) eine Wand (40) enthält, die um einen Winkel α gegenüber einer horizontalen Ebene geneigt ist, die durch die Längsachse (13) verläuft, und die eine Kraft auf das freie Ende (27) des Griffs (21) ausübt, um die obere Stützfläche (26) gegen die untere Stützwand (16) entlang einer Achse (17) zu pressen, die senkrecht zur Längsachse (13) in der Verkuppelposition verläuft, wobei die geneigte Wand (40) flach ist und das freie Ende (27) des Griffs eine gerade untere Kante (28) aufweist, wobei die geneigte Wand (40) eine Kraft auf die untere Kante (28) ausübt, um die obere Stützfläche (26) gegen die untere Stützwand (16) entlang der Achse (17) senkrecht zur Längsachse (13) in der Verkuppelposition zu pressen, wobei die geneigte Wand (40) des Riegels auf den Griff (21) nur durch eine Kontaktlinie wirkt.

2. Baugruppe (50) nach Anspruch 1, **dadurch gekennzeichnet, dass** der Winkel α zwischen 10° und 20°, vorzugsweise 15°, liegt.

3. Baugruppe (50) nach einem der Ansprüche 1 bis 2, **dadurch gekennzeichnet, dass** die Verriegelungsvorrichtung einen Betätigungsknopf (33) für das Riegels (31) umfasst und dass der Betätigungsknopf (33) eine Auflagefläche (38) für einen Finger des Benutzers aufweist, wobei die genannte Auflagefläche (38) im Wesentlichen direkt über der geneigten Wand (40) entlang der Achse (17) senkrecht zur Längsachse (13) im vertikalen Schnittbereich angeordnet ist.

4. Baugruppe (50) nach Anspruch 3, **dadurch gekennzeichnet, dass** der Betätigungsknopf (33) eine Ausstülpung (37) aufweist, der sich entlang der Achse (17) senkrecht zur Längsachse (13) erstreckt, wobei die Auflagefläche (38) auf der Ausstülpung (37) angeordnet ist.

5. Baugruppe (50) nach einem der Ansprüche 1 bis 4, **dadurch gekennzeichnet, dass** die Verriegelungsvorrichtung Mittel (36) zur Rückstellung des Riegels (31) in die Verkuppelposition aufweist.

6. Baugruppe (50) nach Anspruch 5, **dadurch gekennzeichnet, dass** die Rückholmittel des Riegels (31) eine Feder (36) umfassen.

7. Baugruppe (50) nach einem der Ansprüche 1 bis 6, **dadurch gekennzeichnet, dass** das Kochgefäß (2) eine Pfanne, ein Kochtopf oder eine Schmorpfanne ist.

## Claims

1. Set (50) composed of a cooking vessel (2) comprising at least one handle (21) curved outward with an opening (22) provided therein, and a detachable handle (1) intended to cooperate with said handle (21), said detachable handle (1) extending along a longitudinal axis (13) and featuring at one end a nozzle (12) that can be inserted into said opening (22) to assemble onto the handle (21) by pivoting around a pivot axis (14), transversal to the longitudinal axis (13) and within a horizontal plane, said nozzle (12) having an upper end surface (15) to cooperate with a lower surface (23) of the handle (21) forming a first support prior to the pivot axis (14), and said nozzle (12) being equipped with a lower support wall (16) to cooperate with an upper support surface (26) of the handle (21) to form a second support posterior to the pivot axis (14), said handle (1) featuring a locking device comprising a lock (31) movable in translation along the longitudinal axis (13) between a coupling position where the handle (1) is assembled on the handle (21) and an uncoupling position where the handle (1) can be disassembled from the handle (21), said handle (21) having a free end (27), the lock (31) having a wall (40) inclined at an angle α relative to a horizontal plane passing through the longitudinal axis (13) which exerts a force on the free end (27) of the handle (21) to press the upper support surface (26) against the lower support wall (16) along an axis (17) perpendicular to the longitudinal axis (13) in the coupling position, the inclined wall (40) being flat and the free end (27) of the handle having a straight lower edge (28), the inclined wall (40) exerting a force on the lower edge (28) to press the upper support surface (26) against the lower support wall (16) along the axis (17) perpendicular to the longitudinal axis (13) in the coupling position, the inclined wall (40) of the lock acting on the handle (21) by only a line of contact.

2. Set (50) according to claim 1, **characterized in that** the angle α is comprised between 10° and 20°, preferably 15°.

3. Set (50) according to any of claims 1 to 2, **characterized in that** the locking device comprises an operating button (33) for the lock (31) and **in that** the operating button (33) has a support area (38) for a finger of the user, said support area (38) being arranged substantially directly above the inclined wall (40) along the axis (17) perpendicular to the longitudinal axis (13), in the vertical sectional plane.

4. Set (50) according to claim 3, **characterized in that** the operating button (33) has a protusion (37) extending along the axis (17) perpendicular to the longitudinal axis (13), the support area (38) being arranged on the protusion (37).

5. Set (50) according to any of claims 1 to 4, **characterized in that** the locking device comprises return means (36) of the lock (31) to the coupling position.

6. Set (50) according to claim 5, **characterized in that** the return means of the lock (31) comprise a spring (36).

7. Set (50) according to any of claims 1 to 6, **characterized in that** the cooking vessel (2) is a frying pan, a saucepan, or a sauté pan.
